# EUROPÄISCHE PATENTSCHRIFT

(11) **EP 2 707 999 B1**
(45) Veröffentlichungstag und Bekanntmachung des Hinweises auf die Patenterteilung: **22.04.2015**
(21) Anmeldenummer: 12740481.2
(22) Anmeldetag: 06.07.2012
(51) Int. Cl.: H04L 12/40

(54) **SIGNALVERARBEITUNGSSYSTEM UND VERFAHREN ZUR VERARBEITUNG VON SIGNALEN IN EINEM BUSKNOTEN**
SIGNAL PROCESSING SYSTEM AND METHOD FOR PROCESSING SIGNALS IN A BUS NODE
SYSTÈME DE TRAITEMENT DE SIGNAUX ET PROCÉDÉ DE TRAITEMENT DE SIGNAUX DANS UN N UD DE BUS

(30) Priorität: 06.07.2011 DE 102011106687
(43) Veröffentlichungstag der Anmeldung: 19.03.2014
(73) Patentinhaber: Festo AG & Co. KG, 73734 Esslingen (DE)
(72) Erfinder: GRÄFF, Uwe, 73760 Ostfildern (DE)
(74) Vertreter: Patentanwälte Magenbauer & Kollegen Partnerschaft mbB
(86) Internationale Anmeldenummer: PCT/EP2012/002853
(87) Internationale Veröffentlichungsnummer: WO 2013/004395

(56) Entgegenhaltungen:
- DE-A1- 10 358 231
- US-A1- 2003 074 388
- US-A1- 2004 208 163

## Beschreibung

Die Erfindung betrifft ein Signalverarbeitungssystem mit einem Busknoten, der für eine Signalwandlung zwischen Signalen eines internen und eines externen Bussystems ausgebildet ist und jeweils wenigstens eine Schnittstelle für eine Kopplung mit dem externen Bussystem und mit dem internen Bussystem umfasst, sowie mit wenigstens einem Signalaufbereitungsmodul, das für eine physikalische Aufbereitung und/oder Analog/Digitalwandlung von Signalen einer externen Komponente ausgebildet ist und eine Schnittstelle für das interne Bussystem und wenigstens einen Anschluss für die externe Komponente umfasst und mit dem Busknoten über das interne Bussystem verbunden ist. Ferner betrifft die Erfindung ein Verfahren zur Verarbeitung von Signalen in einem Busknoten.

Aus der DE 4332895 C1 ist ein Verfahren zur Fehlererkennung in speicherprogrammierbaren Steuerungen bekannt, die modular aus verschiedenartigen elektrischen Komponenten hierarchisch zusammengesetzt sind, wobei jede Komponente eine physische Baueinheit ist und mindestens eine höchstrangig übergeordnete Komponente als Leitstation ausgebildet ist. Dabei sind für das Verfahren die folgenden Schritte vorgesehen: Nach jeder Installation wenigstens einer Komponente werden aus einem nichtflüchtigen Speicher der jeweiligen Komponente deren baugruppenspezifische Parameter gelesen und auf Kompatibilität mit implementierten Softwaremodulen überprüft. Übergeordnete Komponenten werden zusätzlich auf Kompatibilität mit dem baugruppenspezifischen Parameter jeder untergeordneten Komponente überprüft. Jede erkannte Inkompatibilität wird angezeigt und untergeordnete Komponenten melden die aktuelle Konfiguration und jede erkannte Inkompatibilität an die jeweils übergeordnete Komponente.

Die EP 1728131 A2 offenbart ein elektrisches Feldgerät mit einer rechnergesteuerten zentralen Steuerbaugruppe und zumindest einer Datenein- und/oder -ausgänge aufweisenden Ein-/Ausgabebaugruppe, wobei die zentrale Steuerbaugruppe und die zumindest eine Ein-/Ausgabebaugruppe über einen Datenbus miteinander verbunden sind, und die zumindest eine Ein-/Ausgabebaugruppe Art und Anzahl ihrer Datenein- und/oder ausgänge angebende Baugruppenparameter zum Abruf durch die zentrale Steuerbaugruppe bereitstellt. Somit werden von der zumindest einen Ein-/Ausgabebaugruppe nunmehr die Informationen über die Art und Anzahl ihrer Datenein- und/oder ausgänge bereits selbst zur Verfügung gestellt.

Die US 2006/058847 offenbart ein verteiltes Betriebssystem mit integrierter Diagnosefunktion, einem Bitbus und einem Feldbus und umfasst ein Feldgerät zum Erzeugen einer Feldbetriebscharakteristik sowie ein Feldverarbeitungsmodul zur Verarbeitung der für Feldbetriebscharakteristik des Feldgeräts. Das Feldverarbeitungsmodul enthält eine Felddiagnosekomponente und eine Feldkommunikationskomponente, die für eine Kommunikation über den Bitbus ausgebildet ist. Das Feldverarbeitungsmodul ist zur Erzeugung von Feldbetriebsdaten ausgebildet, die einen Felddiagnoseparameter als Funktion der Feldbetriebscharakteristik umfassen. Ein Zusatzverarbeitungsmodul ist zur Kommunikation mit dem Bitbus und zum Empfangen der Feldbetriebscharakteristik ausgebildet. Das Zusatzverarbeitungsmodul beinhaltet eine zusätzliche Diagnosekomponente und eine Hilfskommunikationskomponente, die eine Feldbus-Schnittstelle und eine Gateway-Komponente umfasst. Das Zusatzverarbeitungsmodul ist auch zum Erzeugen von Zusatzfelddaten als Funktion der Feldbetriebsdaten und zum Übertragen der Zusatzfelddaten über den Feldbus ausgebildet.

Die DE 10358231 A1 offenbart eine Vorrichtung mit wenigstens einem ersten Feldanschlussmodul zum Anschluss wenigstens eines Feldgerätes über einen ersten Feldbus an ein übergeordnetes System zur Datenübertragung zwischen dem wenigstens einen ersten Feldanschlussmodul und dem übergeordnetem System , wobei das wenigstens eine erste Feldanschlussmodul eine erste Busanschaltung zum Anschluss an das übergeordnete System über den ersten Feldbus aufweist und wobei das wenigstens eine erste Feldanschlussmodul eine zweite Busanschaltung zum Anschluss an einen zweiten Bus aufweist.

Die US 2002/194547 offenbart ein Verfahren zur Verdrahtungs-Fehlererkennung, Diagnose und Berichterstattung, um Verbindungsvorrichtungen in einem Prozesssteuerungssystem zu prüfen und insbesondere um die elektrischen Eigenschaften eines Segments Protokoll-Bus und die elektrischen Eigenschaften der Signale des über den Bus übertragen Protokolls zu ermitteln. Hierbei wird eine Signalleitung eines Segments Protokoll-Bus mit einem Mess-Block aus einer Vielzahl von Mess-Blöcken innerhalb einer Verdrahtungsfehler Detektionseinheit verbunden. Der Mess-Block aus der Vielzahl von Mess-Blöcken misst eine mit dem Segment-Protokoll-Bus verknüpfte elektrische Eigenschaft und sendet die gemessenen elektrische Eigenschaft auf eine Verdrahtungsleitung zu einem Verdrahtungsfehler-Diagnosemanager. Der Verdrahtungsfehler-Diagnosemanager analysiert die gemessenen elektrischen Eigenschaften, um eine Fehlerart des Verdrahtungsfehlers zu ermitteln und meldet die Fehlerart des Verdrahtungsfehlers über eine Benutzeroberfläche.

Aus der US 2004/0208163 A1 sind eine Vorrichtung sowie ein Verfahren zum Empfangen wenigstens eines Eingangssignale und zum Ausgeben von Ausgangssignalen in unterschiedlichen Audio-, Video-, Daten- und Mischformaten bekannt. Die Vorrichtung umfasst hierzu mehrere Prozessoren zum Empfang der Eingangssignale, wobei die Prozessoren Signalpakete ausgeben, die zu den empfangenen Eingangssignalen korrespondieren. Jeder der Prozessoren kann Signalpakete empfangen und erzeugt hieraus Ausgangssignale. Die Ausgangssignale korrespondieren zu den Eingangssignalen und/oder zu zusätzlichen lokal erzeugen Signalen. Ein Eingangsprozessor kann mehrere Signalprozessoren umfassen, um die Eingangssignale zu verarbeiten und Daten zu diesen Eingangssignalen zu ermitteln. Der Ausgangsprozessor kann in gleicher Weise mehrere Signalprozessoren umfassen, um empfangene Signale zu verarbeiten, die Bestandteil der Signalpakete sind. Die Verwendung einer Steuereinrichtung erlaubt die Verknüpfung von Signalpaketen, die gleiche oder unterschiedliche Signalkombinationen aufweisen.

Die US 2003/0074388 offenbart eine Netzwerkarchitektur mit einer skalierbaren Prozessormatrix, um Eingangsdaten in Ausgangsdaten umzuwandeln. Dabei ist ein Eingangsprozessor mit einem ersten Netzwerk gekoppelt, um Eingangsdaten zu empfangen und diese an Verarbeitungsprozessoren weiterzuleiten. Ferner ist ein Ausgangsprozessor vorgesehen, der mit einem zweiten Netzwerk und mit dem Verarbeitungsprozessor verbunden ist, um Ausgangsdaten zu sammeln und dies an das zweite Netzwerk weiterzugeben. Der Eingangsprozessor ist dazu eingerichtet, eintreffende Eingangsdaten in Abhängigkeit von einer Auslastung der Verarbeitungsprozessoren zu verteilen, wobei hierzu die Größe der eintreffenden Datenpakete sowie die verbleibende Auslastungsdauer des jeweiligen Verarbeitungsprozessors miteinander in Beziehung gesetzt werden, um eine geeignete Verteilung der Eingangsdaten zu erzielen.

Die bekannten Signalverarbeitungssysteme umfassen stets ein auch als Busknoten bezeichnetes Feldgerät, das für die Signalwandlung zwischen Signalen eines internen und eines externen Bussystems ausgebildet ist, sowie zumeist mehrere mit dem Busknoten elektrisch gekoppelte Module. Bei den Modulen kann es sich beispielsweise um Ein-Ausgabemodule und/oder um Funktionsmodule, insbesondere um Ventilmodule handeln. Die elektrische Kopplung zwischen dem Busknoten und den Modulen kann sowohl eine elektrische Versorgung der Module wie auch ein zur bidirektionalen Kommunikation zwischen den Modulen und dem Busknoten ausgebildetes internes Bussystem umfassen. Dabei dient das interne Bussystem zum Einen zur Übertragung von Steuersignalen, die am Busknoten aus Signalen eines externen Bussystems, beispielsweise eines Feldbussystems, extrahiert und in das Busprotokoll des internen Bussystems gewandelt werden, vom Busknoten an die Module. Zum Anderen dient das interne Bussystem auch zur Übertragung von Signalen, beispielsweise Sensorsignalen von Sensoren, die von den Ein-Ausgangsmodulen als Ausgangssignale bereitgestellt werden, an den Busknoten. Von der Bezeichnung internes Bussystem sollen auch bidirektionale Kommunikationssysteme, beispielsweise nach dem I/O-Link-Standard oder parallelverdrahtete Mehrdrahtsysteme, die auch als Multipolsysteme bezeichnet werden, umfasst sein.

Die Aufgabe der Erfindung besteht darin, ein Signalverarbeitungssystem und ein Verfahren zur Verarbeitung von Signalen in einem Busknoten anzugeben, die eine verbesserte Signalverarbeitung ermöglichen.

Diese Aufgabe wird gemäß einem ersten Aspekt der Erfindung durch ein Signalverarbeitungssystem der eingangs genannten Art mit den Merkmalen des Anspruchs 1 gelöst.

Hierbei ist unter Anderem vorgesehen, dass der Busknoten für eine interne Rohdatenverarbeitung der vom Signalaufbereitungsmodul bereitgestellten Signale sowie für eine Ausgabe wenigstens eines von den verarbeiteten Signalen abhängigen Ausgangssignals an das interne und/oder das externe Bussystem ausgebildet ist.

Dabei findet im Busknoten eine Verarbeitung der Rohdaten der externen Komponente statt. Die Rohdaten werden von dem jeweiligen Signalaufbereitungsmodul vorzugsweise nur soweit aufbereitet, dass sie zumindest nahezu störungs- und verlustfrei über das sehr schnelle interne Bussystem übertragen werden können. Das Signalaufbereitungsmodul hat somit die primäre Aufgabe oder gegebenenfalls die einzige Aufgabe, die von den externen Komponenten eintreffenden Signale für eine Kommunikation über das interne Bussystem aufzubereiten, während eine Verarbeitung der von den Signalen repräsentierten Inhalte erst im Busknoten stattfindet. Durch die Verlagerung der Rohdatenverarbeitung von den Signalaufbereitungsmodulen in den Busknoten wird eine erhebliche Vereinfachung der Signalaufbereitungsmodule erreicht, da die Hardwarekapazität für die Durchführung von Verarbeitungsaufgaben in den Signalaufbereitungsmodulen erheblich verkleinert werden kann. Ferner kann gegebenenfalls darauf verzichtet werden, die jeweiligen Signalaufbereitungsmodule softwaremäßig unterschiedlich zu konfigurieren, wenn sie zum Anschluss unterschiedlicher externer Komponenten eingesetzt werden sollen, da die Hauptaufgabe bzw. die ausschließliche Aufgabe der Signalaufbereitungsmodule darin liegt, die von den externen Komponenten eintreffenden Signale für die Übertragung über das interne Bussystem aufzubereiten.

Exemplarisch kann vorgesehen werden, anhand der Signale der externen Komponente ein Ausgangssignal zu erzeugen, das, vorzugsweise unmittelbar als Steuersignal, für eine weitere externe Komponente genutzt werden kann. Während bislang eine Weiterleitung der Signale der externen Komponente über den Busknoten und das externe Bussystem an eine Maschinensteuerung sowie eine dort stattfindende weitere Verarbeitung sowie eine Rückleitung eines Steuerbefehls über das externe Bussystem an den Busknoten erforderlich war, kann nunmehr vorgesehen sein, dass das Ausgangssignal direkt vom Busknoten nach einer entsprechenden Verarbeitung der jeweiligen Rohdaten bereitgestellt wird.

Beispielsweise kann das Ausgangssignal als Parametriersignal für einen parametrierbaren Sensor und/oder als Ansteuersignal für einen elektrisch ansteuerbaren, an einem Signalaufbereitungsmodul angeschlossenen Aktor, insbesondere einen elektrischen Antrieb, und/oder als Ansteuersignal für ein mit dem Busknoten über das interne Bussystem gekoppeltes Funktionsmodul, beispielsweise ein elektrisch ansteuerbares Ventilmodul, genutzt werden. Durch die Signalverarbeitung im Busknoten und die Erzeugung eines vorzugsweise direkt nutzbaren Ausgangssignals, das in der vorstehend beschriebenen, exemplarischen Weise als Eingangssignal für unterschiedliche Komponenten genutzt werden kann, die mit dem internen Bussystem verbunden sind, kann insbesondere eine Reduktion der über das externe Bussystem zu übertragenden Datenmenge erreicht werden. Dies ist darauf zurückzuführen, dass bestimmte Signale gar nicht und andere nur in ausgewählten Fällen über das externe Bussystem übertragen werden müssen, um in der Maschinensteuerung entsprechende Steuerbefehle zu erzeugen, die über das externe Bussystem an den Busknoten bereitgestellt werden. Beispielhaft kann eine Übertragung von Signalen einer externen Komponente über das externe Bussystem vermieden werden, wenn im Busknoten sämtliche zur Erzeugung eines entsprechenden Ausgangssignals notwendigen Voraussetzungen vorliegen. Da in vielen Fällen auf eine Übertragung der Signale der externen Komponente über den Busknoten und das externe Bussystem zur Maschinensteuerung verzichtet werden kann, ergeben sich verkürzte Signallaufwege für die Signale der externen Komponenten und die daraus im Busknoten erzeugten Ausgangssignale, wodurch eine verbesserte Reaktionsfähigkeit des Signalverarbeitungssystem resultiert.

Ferner ist vorgesehen, dass der Busknoten eine zumindest teilweise frei programmierbare und/oder frei belegbare Speichereinrichtung zur Speicherung eines Algorithmus und eine Verarbeitungseinrichtung zur Verarbeitung der vom Signalaufbereitungsmodul bereitgestellten Signale und zur Ausgabe eines Ausgangssignals mittels des gespeicherten Algorithmus umfasst. Die Speichereinrichtung ist zur Speicherung wenigstens eines Algorithmus, vorzugsweise mehrerer Algorithmen, ausgebildet, die entweder während des Herstellungsprozesses fest oder löschbar in die Speichereinrichtung eingespeichert werden können oder bei einer softwaremäßigen Konfiguration des Busknotens zu einem beliebigen Zeitpunkt in den Busknoten geladen werden können. Der Algorithmus kann statisch ausgebildet sein, so dass für einen Anwender keine Möglichkeit zur Einflussnahme auf die Funktionsweise des Algorithmus besteht. Vorzugsweise ist der Algorithmus parametrierbar, so dass ein Benutzer durch Eingabe von Parameterwerten in den Busknoten das Verhalten des Algorithmus beeinflussen kann. Die Verarbeitungseinrichtung dient zur Ermittlung des Ausgangssignals anhand des aus der Speichereinrichtung ausgewählten und gegebenenfalls benutzerindividuell parametrierten Algorithmus. Vorzugweise sind die Speichereinrichtung und die Verarbeitungseinrichtung in einem gemeinsamen Halbleiterbaustein realisiert.

Darüber hinaus ist vorgesehen, dass in der, insbesondere als Mikroprozessor oder Mikrocontroller ausgebildeten, Verarbeitungseinrichtung mehrere Anweisungsebenen zur Verarbeitung unterschiedlicher Anweisungen vorgesehen sind, wobei eine erste Anweisungsebene für eine unmittelbare Kommunikation mit der Verarbeitungseinrichtung und weitere Anweisungsebenen für eine, vorzugsweise ausschließliche, Kommunikation mit jeweils benachbarten, insbesondere ausschließlich mit unmittelbar benachbarten, Anweisungsebenen eingerichtet sind. Die einzelnen Anwendungsebenen sind vorgesehen, um eine einfache Handhabung der Verarbeitungseinrichtung zu gewährleisten. Die erste Verarbeitungsebene wird typischerweise vom Hersteller des elektronischen Bausteins, insbesondere des Mikroprozessors oder Mikrocontrollers, definiert und zur Verfügung gestellt, da in dieser Verarbeitungsebene direkte Zugriffe auf die Verarbeitungseinrichtung, beispielsweise durch Speichern oder Auslesen von Dateninhalten in bzw. aus Speicherzellen, erfolgt und hierzu eine genaue Kenntnis des physikalischen Aufbaus der Verarbeitungseinrichtung notwendig ist. Über dieser ersten Anweisungsebene können eine oder mehrere weitere Anweisungsebenen vorgesehen sein. Während in der ersten Anwendungsebene ein Anwendungsbefehlssatz verwendet wird, der auf die Anforderungen der Verarbeitungseinrichtung zugeschnitten ist, können in den höheren Anwendungsebenen auch jeweils unterschiedliche Anwendungsbefehlssätze verwendet werden, die mit zunehmendem Abstand von der Verarbeitungseinrichtung mehr auf den Endnutzer des Signalverarbeitungssystems zugeschnitten sind. Vorzugsweise ist in wenigstens einer der Anwendungsebenen auch eine graphische Benutzeroberfläche ausgebildet, die eine besonders einfache Konfiguration des Signalverarbeitungssystems ermöglicht.

In einer Anweisungsebene, die über der ersten Anweisungsebene angesiedelt ist, ist die Verarbeitungseinrichtung für einen, insbesondere gesicherten, Datenaustausch mit wenigstens einem Anweisungsmodul mittels eines standardisierten Anweisungsbefehlssatzes eingerichtet. Dabei werden beispielsweise die von einem Signalaufbereitungsmodul eintreffenden Signale, die nicht notwendigerweise auf der gleichen Anweisungsebene wie das Anweisungsmodul vorverarbeitet werden, an die Anweisungsebene des Anweisungsmoduls bereitgestellt. In der entsprechenden Anweisungsebene werden die Signale mit Hilfe eines standardisierten Anweisungsbefehlssatzes, der für die Kommunikation aus der Anweisungsebene mit dem Anweisungsmodul vorgesehen ist, an dieses weitergegeben. Dabei sind die Befehle des standardisierten Anweisungsbefehlssatzes vorzugsweise so gewählt, dass diese nur direkt in der Anweisungsebene ausgeführt werden können, nicht jedoch in benachbarten Anweisungsebenen. Dadurch werden unerwünschte Eingriffe in die benachbarten Anweisungsebenen verhindert und es wird eine hohe Betriebssicherheit für die Verarbeitungseinrichtung sowie eine Austauschbarkeit des Anweisungsmoduls gewährleistet. Ferner ist damit ein Einsatz des jeweiligen Anweisungsmoduls in unterschiedlich konfigurierten Verarbeitungseinrichtungen möglich, sofern diese eine für derartige Anweisungsmodule eingerichtete Anweisungsebene aufweisen.

Ferner ist vorgesehen, dass die Verarbeitungseinrichtung in einer Anweisungsebene, die über der ersten Anweisungsebene angesiedelt ist, eine virtuelle Maschine, insbesondere eine Laufzeitumgebung, umfasst, die zum Betrieb des Anweisungsmoduls in einer standardisierten, insbesondere gesicherten, Anweisungsmodulumgebung ausgebildet ist. Die virtuelle Maschine ist ein Computerprogramm, das in der Anweisungsebene abläuft, in der das Anweisungsmodul ausgeführt werden soll und das dazu eingesetzt wird, das beispielsweise als Zwischencode oder Bytecode ausgebildete Anweisungsmodul auszuführen. Dabei interpretiert oder übersetzt die virtuelle Maschine den Bytecode für eine darunterliegende Anweisungsebene, in der beispielsweise die Signale von den Signalaufbereitungsmodulen eintreffen und/oder ein Ausgangssignal über das interne oder externe Bussystem weitergeleitet werden. Eine Laufzeitumgebung umfasst insbesondere eine einfache Befehlsstruktur und gegebenenfalls Möglichkeiten zur Fehlerbehebung und Optimierung einer Befehlskette. Einige Funktionen der Laufzeitumgebung können vom Endbenutzer eingestellt oder parametriert werden, andere Funktionen wie beispielsweise die Ressourcenverwaltung der Verarbeitungseinrichtung sind hingegen nicht zugänglich. Die Laufzeitumgebung kann an ein Betriebssystems der Verarbeitungseinrichtung, das in einer hierarchisch niedrigeren Anweisungsebene liegt, angepasst sein und stellt eine von diesem Betriebssystem unabhängige Plattform für die Anweisungsmodule dar. Somit können die Anweisungsmodule auf einer Vielzahl unterschiedlicher Betriebssysteme eingesetzt werden, ohne hierfür Veränderungen an den Anweisungsmodulen vornehmen zu müssen.

Vorteilhafte Weiterbildungen der Erfindung sind Gegenstand der Unteransprüche.

Vorteilhaft ist es, wenn die Verarbeitungseinrichtung in einer Anweisungsebene, die über der ersten Anweisungsebene angesiedelt ist, für einen Betrieb eines oder mehrerer, vorzugsweise endnutzerseitig vorgebbarer, Anweisungsmodule eingerichtet ist und wenn der zur Verarbeitung der vom Signalaufbereitungsmodul bereitgestellten Signale und zur Ausgabe eines Ausgangssignals vorgesehene Algorithmus als Anweisungsmodul ausgebildet ist. Bei den Anwendungsmodulen handelt es sich vorzugsweise um leicht austauschbare Computer-Programmmodule, die vom Endbenutzer beispielsweise über das Internet aus einer Datenbank ausgewählt und über eine geeignete drahtgebundene oder drahtlose Schnittstelle in der Verarbeitungseinrichtung gespeichert werden können. Das oder die Anwendungsmodule sind dazu eingerichtet, die von einem oder mehreren Signalaufbereitungsmodulen eintreffenden Signale zu verarbeiten und sich hierbei der Rechenleistung des Busknotens zu bedienen. Die Anwendungsmodule können derart ausgebildet werden, dass sie entweder in der Verarbeitungseinrichtung oder bereits vor dem Speichern in die Verarbeitungseinrichtung parametriert werden, um eine vorteilhafte Anpassung an die Eigenschaften der Verarbeitungseinrichtung und/oder an die Eigenschaften der angeschlossenen Signalaufbereitungsmodule zu ermöglichen.

Bei einer Weiterbildung der Erfindung ist vorgesehen, dass die virtuelle Maschine für eine gleichzeitige Verwaltung mehrerer Anweisungsmodule eingerichtet ist und/oder dass mehrere virtuelle Maschinen zur Verarbeitung unterschiedlicher Anweisungsmodule vorgesehen sind. Hierdurch können entweder mehrere Anweisungsmodule, die mit dem gleichen standardisierten Anweisungsbefehlssatz arbeiten, parallel und/oder sequentiell betrieben werden. Ergänzend oder alternativ kann vorgesehen werden, dass in einer einzigen oder in unterschiedlichen Anweisungsebenen unterschiedliche virtuelle Maschinen, insbesondere Laufzeitumgebungen, vorgesehen sind, die Anweisungsmodule mit unterschiedlichen standardisierten Anweisungsbefehlssätzen verarbeiten können.

Bevorzugt ist der Busknoten derart für eine Bereitstellung des Ausgangssignals an das externe Bussystem ausgebildet, dass das Ausgangssignal in gleicher Weise wie die Signale von Signalaufbereitungsmodulen an das externe Bussystem übergebbar ist. Bei einem Busknoten, wie er aus dem Stand der Technik bekannt ist, besteht eine der Hauptaufgaben darin, die Signale externer Komponenten, die von den Signalaufbereitungsmodulen über das interne Bussystem bereitgestellt werden, in das Busprotokoll des externen Bussystems zu überführen und somit der Maschinensteuerung, die beispielsweise als speicherprogrammierbare Steuerung ausgebildet sein kann, zu überführen. Die Maschinensteuerung erkennt in dem Busprotokoll die Signale der externen Komponenten und kann diese Signale weiterverarbeiten. Demgegenüber ist bei dem erfindungsgemäßen Busknoten eine Verarbeitung von Signalen externer Komponenten vorgesehen, die zu Ausgangssignalen führt, die einen anderen Informationsgehalt haben, beispielsweise durch Betrachtung der Signale über einen längeren Zeitraum und/oder Kombination von mehreren Signalen. Diese Ausgangssignale werden vom erfindungsgemäßen Busknoten derart an das externe Bussystem bereitgestellt, dass sie sich für die Maschinensteuerung wie die Signale eines weiteren am Busknoten angeschlossenen Signalaufbereitungsmoduls darstellen. Da es sich jedoch um zusammengefasste und/oder kombinierte Signale anderer Signalaufbereitungsmodule handelt, können die Ausganssignale auch als Signale virtueller Signalaufbereitungsmodule angesehen werden.

Vorteilhaft ist es, wenn die Speichereinrichtung für die Speicherung und Verarbeitung eines Anweisungsmoduls, das den Algorithmus enthält, ausgebildet ist. Das Programmmodul kann damit als fertig programmierte Anwendung zur Verarbeitung der Rohdaten in die Speichereinrichtung geladen werden und im Busknoten zur Verarbeitung der Rohdaten eingesetzt werden. Vorzugsweise sind verschiedene Anweisungsmodule verfügbar, die unterschiedliche Algorithmen enthalten und somit für unterschiedliche Verarbeitungsaufgaben ausgebildet sind. Die Anweisungsmodule können exemplarisch aus einer Modulbibliothek, beispielsweise über Datenfernübertragung, insbesondere über das Internet, bereitgestellt werden und je nach gewünschter Anwendung in das Busknoten geschrieben werden.

Hierzu ist es vorteilhaft, wenn die Speichereinrichtung für einen Schreibzugriff oder einen Lese- und Schreibzugriff auf das wenigstens eine Anweisungsmodul mittels des externen Bussystems und/oder einer am Busknoten ausgebildeten Eingangsschnittstelle ausgebildet ist, um eine Änderung und/oder eine Parametrierung und/oder einen Austausch des Anweisungsmoduls zu ermöglichen.

Bei einer Weiterbildung der Erfindung ist vorgesehen, dass das Anweisungsmodul für eine Überwachung von Energieströmen und/oder Volumenströmen und/oder Wartungsintervallen und/oder Sicherheitsfunktionen der daran angeschlossenen externen Komponente ausgebildet ist. Beispielhaft kann das Programmmodul anhand der bereitgestellten Rohdaten für die Ermittlung eines Energiestroms, also beispielsweise einer elektrischen Stromstärke oder einer bereitgestellten elektrischen Leistung eingesetzt werden. Dabei kommt der externen Komponente die Aufgabe zu, einen oder mehrere physikalische Kennwerte in elektrische Signale umzusetzen. Im Signalaufbereitungsmodul findet die physikalischen Aufbereitung und/oder die Analog/Digitalwandlung der Signale statt, während ein Informationsgehalt der Signale erst im Busknoten ausgewertet und zu einem neuen Ausgangssignal umgeformt wird.

Vorzugsweise ist das Signalaufbereitungsmodul ausschließlich für eine physikalischen Aufbereitung und/oder eine Analog/Digitalwandlung von Signalen einer externen Komponente ausgebildet. Hierdurch kann das Signalaufbereitungsmodul einfach aufgebaut werden und ist für eine Vielzahl von unterschiedlichen Anwendungen, insbesondere für eine Kopplung ganz unterschiedlicher externer Komponenten mit dem internen Bussystem verwendbar, ohne dass eine Änderung am Signalaufbereitungsmodul erforderlich ist. Bei bisher bekannten Signalaufbereitungsmodulen war stets aufgrund der geringen Bandbreite/Datenübertragungsgeschwindigkeit der bislang üblichen internen Bussysteme eine Verarbeitung der Rohdaten der externen Komponente unmittelbar im Signalaufbereitungsmodul erforderlich. Dementsprechend war eine individuelle Anpassung des Signalaufbereitungsmoduls an unterschiedliche externe Komponenten notwendig, wobei diese Anpassung hardware- und/oder softwareseitig erfolgen musste und zur Folge hatte, dass eine Vielzahl unterschiedlicher Signalaufbereitungsmodule bereitgestellt werden mussten, um die unterschiedlichen Verarbeitungsaufgaben zu erfüllen. Durch die Verlagerung der Rohdatenverarbeitung in den Busknoten, die aufgrund der vergrößerten Bandbreite / erhöhten Datenübertragungsrate der nunmehr verfügbaren internen Bussysteme möglich ist, kann eine individuelle Anpassung der Signalaufbereitungsmodule entfallen. Vielmehr werden die unterschiedlichen Verarbeitungsaufgaben durch das oder die in der Verarbeitungseinrichtung des Busknotens ablaufenden Anweisungsmodule wahrgenommen. Damit kann die Anzahl der unterschiedlichen Signalaufbereitungsmodule erheblich verringert werden.

Zweckmäßig ist es, wenn das in der Verarbeitungseinrichtung des Busknotens gespeicherte Anweisungsmodul als Zähler ausgebildet ist, wobei eine Ausgabe eines Ausgangssignals durch den Busknoten beispielsweise vorgesehen sein kann, sobald der Zähler eine vorgebbare Anzahl von Zählimpulsen ermittelt hat. Da die Zählung der Impulse nicht unmittelbar im Signalaufbereitungsmodul stattfindet, kann die dort verwirklichte elektronische Schaltung einfach gehalten werden. In Verbindung mit dem erfindungsgemäßen Busknoten wird vom Signalaufbereitungsmodul stets nur die physikalische Aufbereitung der Signale und gegebenenfalls eine Analog/Digitalwandlung der Signale sichergestellt.

Bei einer vorteilhaften Weiterbildung der Erfindung ist vorgesehen, dass das Anweisungsmodul für eine logische Verknüpfung mehrerer Signale unterschiedlicher externer Komponenten und/oder für eine Verknüpfung von Ausgangssignalen ausgebildet ist. Hierdurch ist eine besonders schnelle lokale Verarbeitung von Signalen externer Komponenten und/oder mehrerer Ausgangssignale, die gegebenenfalls von unterschiedlichen Signalaufbereitungsmodulen bereitgestellt werden, möglich. Exemplarisch können an einem Signalaufbereitungsmodul mehrere Sensoren angeschlossen sein, deren Signale im Anweisungsmodul logisch miteinander verknüpft werden, um beispielsweise bei Vorliegen wenigstens einer vorgebbaren Kombination von Signalpegeln der verschiedenen Signale ein oder mehrere Ausgangssignale zu erzeugen.

Bevorzugt ist der Busknoten für die Bereitstellung eines Ausgangssignals ausgebildet, das für eine Ansteuerung wenigstens einer mit einem Signalaufbereitungsmodul verbundenen externen Komponente und/oder eines Funktionsmoduls eingerichtet ist. Hierbei wird der Busknoten unmittelbar, also ohne Zwischenschaltung des externen Bussystems und der Maschinensteuerung als Ansteuerung für externe Komponenten und/oder Funktionsmodule eingesetzt, so dass für diese Vorgänge keine Kapazität des externen Bussystems und der Maschinensteuerung in Anspruch genommen werden muss. Daraus ergibt sich eine besonders kurze Reaktionszeit für die Ansteuerungsvorgänge in Abhängigkeit von den eintreffenden Signalen der Sensoren und/oder der Funktionsmodule bei einer gleichzeitig vereinfachten elektrischen bzw. elektronischen Gestaltung der Signalaufbereitungsmodule.

Vorteilhaft ist es, wenn das Anweisungsmodul für eine Zustandsüberwachung, insbesondere für eine Prozessüberwachung und/oder eine Maschinenüberwachung, anhand von Signalen der wenigstens einen externen Komponente ausgebildet ist und derart eingerichtet ist, dass das Ausgangssignal in einem vorgebbaren Fehlerfall als Alarmsignal an das externe Bussystem und/oder als Abschaltsignal über das interne Bussystem an die externe Komponente und/oder an ein Funktionsmodul bereitgestellt wird. Bei der Durchführung einer Zustandsüberwachung ist es von großer Bedeutung, dass eine Veränderung des überwachten Zustands in möglichst kurzer Zeit zu einer Reaktion führt. Dies kann durch das erfindungsgemäße Signalverarbeitungssystem in vorteilhafter Weise gewährleistet werden, da aufgrund der lokalen Signalverarbeitung im Busknoten allenfalls sehr geringe Verzögerungszeiten aufgrund einer Signalübertragung über das interne Bussystem und der Verarbeitung der Signale im Busknoten auftreten, währen größere Verzögerungszeiten, wie sie durch eine Signalwandlung im Busknoten und eine Signalübertragung über das externe Bussystem bis zu Maschinensteuerung auftreten könnten, entfallen. Vorzugsweise ist der Busknoten derart konfiguriert, dass ein Alarmsignal und/oder ein Abschaltsignal für angeschlossene externe Komponenten und/oder Funktionsmodule vom Busknoten bereitstellt wird, sobald ein überwachtes Signal einen vorgebbaren Grenzwert in vorgebbarer Weise, insbesondere im Hinblick auf eine Änderungsgeschwindigkeit und/oder eine Dauer der Überschreitung, überschreitet.

Zweckmäßig ist es, wenn der Busknoten für eine Parametrierung des Anweisungsmoduls über das externe Bussystem und/oder über einen Direktzugriff auf den Busknoten ausgebildet ist. Eine Parametrierung des Anweisungsmoduls im Busknoten kann abseits des Betriebs vorgenommen werden, beispielsweise durch entsprechende Vorgabe seitens der Maschinensteuerung, die den Busknoten über das externe Bussystem anspricht. Bei einem Direktzugriff, beispielsweise mit einem tragbaren Computer, wird ohne Nutzung des externen/internen Bussystems direkt auf den Busknoten und das darin enthaltene Anweisungsmodul zugegriffen.

Die Aufgabe der Erfindung wird gemäß einem zweiten Aspekt durch ein Verfahren zur Verarbeitung von Signalen in einem Signalaufbereitungssystem gelöst, das für eine Erfassung und Verarbeitung von Signalen wenigstens einer externen Komponente, einer Weiterleitung der Signale über ein internes Bussystem zu einem Busknoten und eine Verarbeitung der Signale im Busknoten ausgebildet ist, wobei die folgenden Schritte vorgesehen sind: Empfangen von Signalen einer externen Komponente, Aufbereiten und/oder Digitalisieren der Signale in einem Signalaufbereitungsmodul, Übertragen der Signale über das interne Bussystem an den Busknoten, Verarbeiten der Signale mittels eines im Busknoten hinterlegten Algorithmus, Ausgeben eines durch die Verarbeitung erzeugten Ausgangssignals an eine externe Komponente und/oder an ein Funktionsmodul, wobei die als Rohdaten im Busknoten eintreffenden Signale in einer vom Busknoten umfassten Verarbeitungseinrichtung, in der mehrere Anweisungsebenen zur Verarbeitung unterschiedlicher Anweisungen ausgebildet sind, wobei eine erste Anweisungsebene für eine unmittelbare Kommunikation mit der Verarbeitungseinrichtung und weitere Anweisungsebenen für eine Kommunikation mit jeweils benachbarten Anweisungsebenen eingerichtet sind, in einer über der ersten Anweisungsebene angesiedelten weiteren Anweisungsebene von dem als Anweisungsmodul in einer virtuellen Maschine, insbesondere in einer Laufzeitumgebung, ausgebildeten Algorithmus verarbeitet werden.

Bei einer vorteilhaften Weiterbildung des Verfahrens ist vorgesehen, dass ein Schreibzugriff oder ein Lese- und Schreibzugriff mittels des externen Bussystems und/oder einer am Busknoten ausgebildeten Eingangsschnittstelle auf die Speichereinrichtung vorgenommen wird, um eine Änderung und/oder eine Parametrierung und/oder einen Austausch des Anweisungsmoduls zu bewirken.

Vorteilhaft ist es, wenn das Anweisungsmodul für eine Überwachung von Energieströmen und/oder Volumenströmen und/oder Wartungsintervallen und/oder Sicherheitsfunktionen der daran angeschlossenen externen Komponente eingesetzt wird.

In Ausgestaltung des Verfahrens ist vorgesehen, dass im Signalaufbereitungsmodul ausschließlich eine physikalischen Aufbereitung und/oder eine Analog/Digitalwandlung von Signalen einer externen Komponente vorgenommen wird.

In weiterer Ausgestaltung des Verfahrens ist vorgesehen, dass mit dem Anweisungsmodul eine Zustandsüberwachung einer Vorrichtung durchgeführt wird, wobei der Vorrichtung wenigstens eine am Signalaufbereitungsmodul angeschlossene externe Komponente zugeordnet ist und somit der Busknoten in wenigstens einem vorgebbaren Fehlerfall ein Alarmsignal und/oder ein Abschaltsignal an eine angeschlossene externe Komponente und/oder an ein Funktionsmodul und/oder an das externe Bussystem als Ausgangssignal bereitstellen kann.

Eine vorteilhafte Weiterbildung des Verfahrens sieht vor, dass das Anweisungsmodul eine logische, insbesondere boolesche, Verknüpfung von Signalen unterschiedlicher externer Komponenten durchführt und/oder das Ausgangssignal für eine Ansteuerung wenigstens eines Funktionsmoduls und/oder wenigstens einer externen Komponente genutzt wird.

Eine vorteilhafte Ausführungsform der Erfindung ist in der Zeichnung dargestellt. Dabei zeigt:

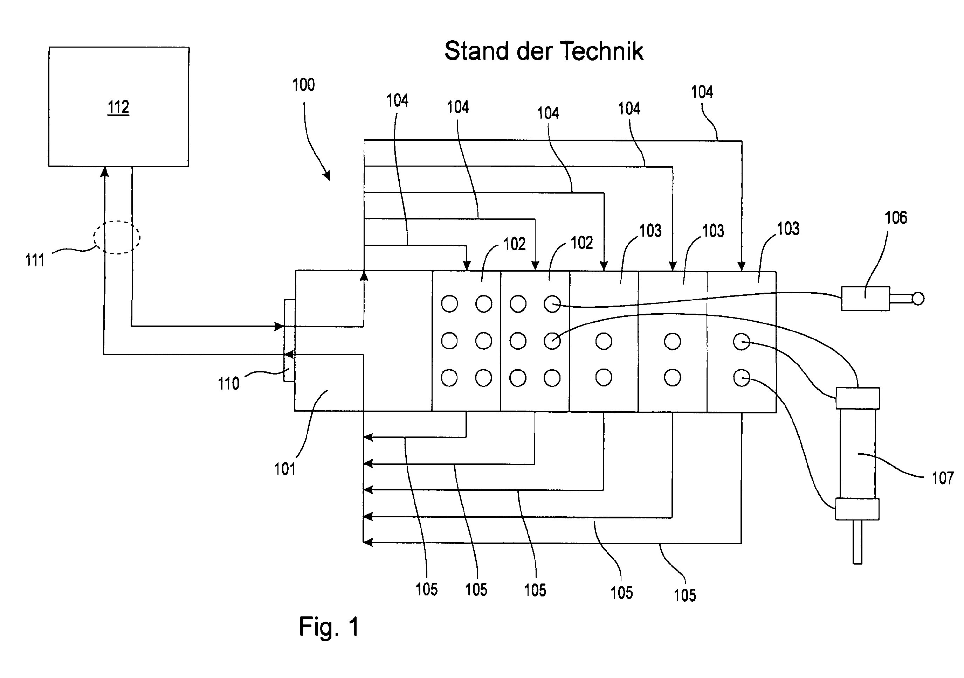

- Figur 1: ein Signalverarbeitungssystem nach dem Stand der Technik,
- Figur 2: eine Ausführungsform eines erfindungsgemäßen Signalverarbeitungssystems und
- Figur 3: eine schematische Darstellung einer Verarbeitungseinrichtung des in den Figuren 1 und 2 dargestellten Signalverarbeitungssystem.

Ein aus dem Stand der Technik bekanntes Signalverarbeitungssystem 100 umfasst einen Busknoten 101, mehrere Eingangs-/Ausgangsmodule 102 und mehrere Funktionsmodule 103. Die Eingangs-/Ausgangsmodule 102 und die Funktionsmodule 103 sind exemplarisch längs einer Aufreihungsachse an dem Busknoten 101 aufgereiht. Hierbei kann vorgesehen werden, dass elektrische und/oder fluidische Verbindungen zwischen benachbarten Eingangs-/Ausgangsmodulen 102 und Funktionsmodulen 103 durch interne, nicht näher dargestellte elektrische Leitungen und/oder Fluidkanäle gebildet werden, die sich längs der Aufreihungsachse erstrecken. Bei einer nicht dargestellten Ausführungsform der Erfindung sind die Module nicht oder nur teilweise mechanisch miteinander gekoppelt.

Die Eingangs-/Ausgangsmodule 102 sind beispielsweise für den Anschluss externer Komponenten wie diskreten Sensoren 106 oder in fluidischen oder elektrischer Aktoren 107 integrierten Sensoren vorgesehen und zur Bereitstellung und Verarbeitung von elektrischen Signalen ausgebildet. Die Funktionsmodule 103 können beispielsweise als Ventilmodule ausgebildet sein, die dazu eingerichtet sind, wenigstens eine Fluidströmung zu beeinflussen, beispielsweise zu blockieren, vollständig freizugeben oder zu drosseln, um somit beispielsweise einen fluidischen oder elektrischen Aktor 107 anzusteuern, der seinerseits eine nicht näher dargestellte Wegmesseinrichtung aufweist, die elektrisch mit einem Eingangs-/Ausgangsmodul 102 verbunden ist. Der Busknoten 101 weist eine externe Schnittstelle 110 auf, die zur elektrischen Verbindung mit einem übergeordneten Bussystem 111 ausgebildet ist, über das beispielsweise Steuerbefehle einer Maschinensteuerung 112 an das Signalverarbeitungssystem 100 bereitgestellt werden können und/oder Sensorsignale ausgehend vom Signalverarbeitungssystem 100 über das externe Bussystem 111 an die Maschinensteuerung 112 zur weiteren Verarbeitung übertragen werden können.

Im Busknoten 100 findet eine Signalwandlung zwischen den Signalen des externen Bussystems 111 und Signalen eines internen Bussystems statt, so dass Steuerbefehle der Maschinensteuerung 112, die über das externe Bussystem zur Verfügung gestellt werden, in das Protokoll des internen Bussystems gewandelt und über das interne Bussystem zu den Eingangs-/Ausgangsmodulen 102 und den Funktionsmodulen 103 übertragen werden können. Bei dem externen Bussystem 111 handelt es sich exemplarisch um ein Feldbussystem, insbesondere gemäß der Profibus-, Industrial Ethernet- oder LVDS-Spezifikation (Low Voltage Differential Signal).

Die Signalübertragung über das interne Bussystem ist schematisch durch die Pfeile für die Steuersignale 104 in der Figur angedeutet. Von den Eingangs-/Ausgangsmodulen 102 und von den Funktionsmodulen 103, die jeweils Signalaufbereitungsmodule darstellen, können Signale bereitgestellt werden, die beispielsweise in einer Abhängigkeit zu den angeschlossenen Sensoren 106 oder Aktoren 107, die ihrerseits als externe Komponenten bezeichnet werden, bzw. zu Funktionszuständen der Funktionsmodule 103 stehen. Diese Signale werden über das interne Bussystem gemäß den Pfeilen für die Sensorsignale 105 an den Busknoten 101 zurückgesendet. Dieser Aufbau des internen Bussystems erfordert in den Eingangs-/Ausgangsmodulen 102 und den Funktionsmodulen 103 lediglich eine physikalische Aufarbeitung, beispielsweise eine Verstärkung der Signale der Sensoren 106, Aktoren 107 oder Funktionsmodule 103 und/oder eine Digitalisierung der gewonnen Signale, um diese über das interne Bussystem zum Busknoten 101 übertragen zu können.

Die im Busknoten 101 eintreffenden Signale der externen Komponenten 106, 107 werden aus dem Protokoll des internen Bussystems in das Protokoll des externen Bussystems 111 umgesetzt und anschließend über das externe Bussystem 111 an die Maschinensteuerung 112 weitergeleitet. In der Maschinensteuerung 112 findet anschließend eine Verarbeitung der Signale statt, um daraus Ausgangs- oder Steuersignale zu erzeugen, die über das externe Bussystem 111 zurück an den Busknoten 101 geleitet werden. Dort findet eine Umwandlung der Ausgangs- oder Steuersignale aus dem Protokoll des externen Bussystems 111 in das Protokoll des internen Bussystems statt, so dass die Ausgangs- oder Steuersignale der Maschinensteuerung 112 an die Eingangs-/Ausgangsmodule 102 und/oder die Funktionsmodule 103 und die daran angeschlossenen externen Komponenten 106, 107 übermittelt werden können. Durch die mehrfache Umwandlung der Signale bzw. Ausgangssignale und die Übertragung der Signale bzw. Ausgangssignale sowohl über das interne Bussystem als auch über das externe Bussystem 111 ergeben sich relativ lange Laufzeiten zwischen der Detektion eines Zustands an einer externen Komponente 106, 107 und der Bereitstellung eines entsprechenden Ausgangs- oder Steuersignals an eine externe Komponente 106, 107.

Ergänzend oder alternativ kann vorgesehen sein, dass die Signale der externen Komponenten 106, 107 unmittelbar in den Eingangs-/Ausgangsmodulen 102 verarbeitet werden. Die hierbei ermittelten Ausgangssignale können wahlweise über das interne Bussystem, den Busknoten 101 und das externe Bussystem 111 an die Maschinensteuerung 112 übertragen werden oder direkt im jeweiligen Eingangs-/Ausgangsmodul 102 zur Ansteuerung der angeschlossenen externen Komponente 106, 107 eingesetzt werden. Hierzu ist jedoch eine spezifische Hardwareausrüstung des jeweiligen Eingangs-/Ausgangsmoduls 102 erforderlich, wodurch die Herstellungskosten für ein derartiges Eingangs-/Ausgangsmoduls 102 höher ausfallen als für ein Eingangs-/Ausgangsmodul 102, das lediglich für eine physikalische Aufbereitung und/oder Digitalisierung der ermittelten Signale ausgebildet ist.

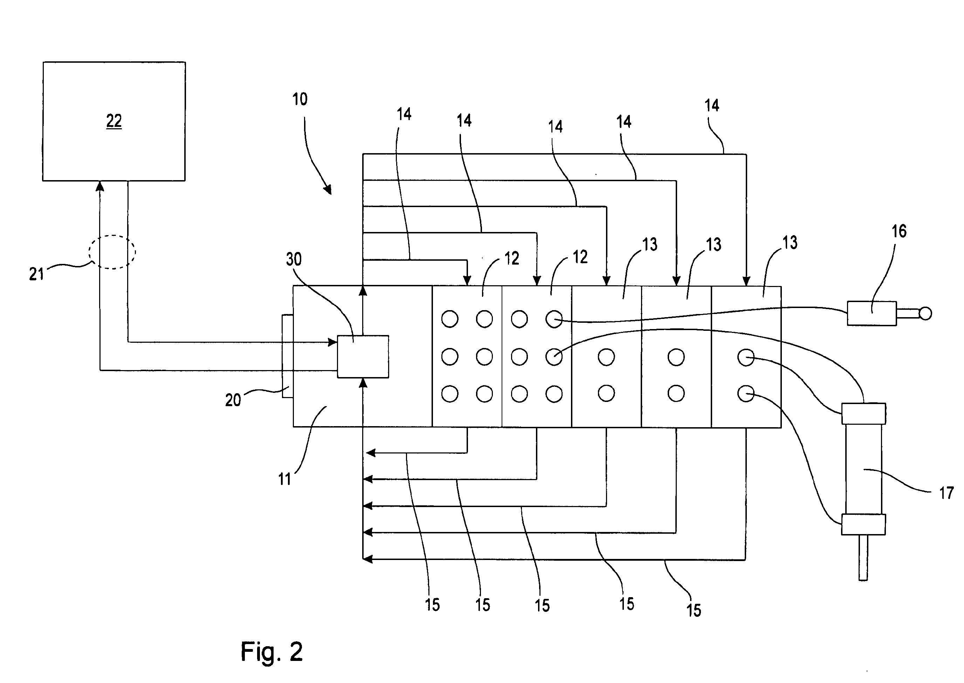

Bei der in der Figur 2 dargestellten Ausführungsform eines erfindungsgemäßen Signalverarbeitungssystems 10 ist grundsätzlich die gleiche mechanische Aufbauweise wie beim Signalverarbeitungssystem 100 gewählt. Somit sind an einem Busknoten 11 mehrere Eingangs-/Ausgangsmodule 12 und Funktionsmodule 13 längs einer Aufreihungsachse aneinander aufgereiht und stehen durch nicht näher dargestellte elektrische Verbindungen und gegebenenfalls auch durch Fluidkanäle in elektrischer und gegebenenfalls fluidischer Verbindung zueinander. An den Eingangs-/Ausgangsmodulen 12 können Sensoren 16 und/oder beispielsweise Wegmesssysteme von, beispielsweise fluidische o der elektrische Aktoren 17 angeschlossen werden, die Sensorsignale an die Eingangs-/Ausgangsmodule 12 bereitstellen.

Übereinstimmend mit dem vorstehend beschriebenen Stand der Technik werden die von den Sensoren 16 und/oder den Aktoren 17 bzw. von den Funktionsmodulen 13 bereitgestellten Signale über das interne Bussystem an den Busknoten 11 übertragen. Abweichend vom vorstehend beschriebenen Stand der Technik findet in den Ein-/Ausgangsmodulen 12 jedoch keine echte Signalverarbeitung statt, vielmehr werden die eintreffenden Signale lediglich verstärkt und/oder digitalisiert, um einen störungsarmen Transport über das interne Bussystem zum Busknoten 11 zu gewährleisten. Diese Übertragung von Rohdaten über das interne Bussystem wird durch die Schnelligkeit des internen Bussystems ermöglicht, die eine Echtzeitübertragung der Rohdaten gewährleistet.

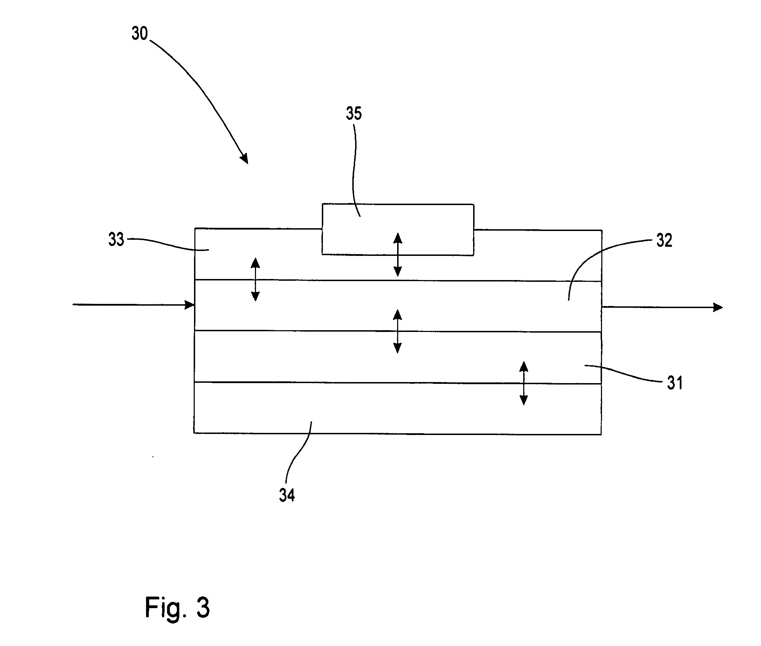

Im Busknoten 11 ist in einer Verarbeitungseinrichtung 30, bei der es sich insbesondere um einen Mikroprozessor oder einen Mikrocontroller handelt, wenigstens ein Algorithmus gespeichert, mit dessen Hilfe eine Verarbeitung der Signale vorgenommen wird, also beispielsweise ein Vergleich empfangender Signal mit gespeicherten Wertetabellen, um daraus Ausgangssignale abzuleiten und/oder eine logische Verknüpfung mehrerer Signale zur Erzeugung eines Ausgangssignals. Die Verarbeitung der Signale erfolgt exemplarisch in mehreren, unterschiedlichen Anweisungsebenen, wie nachstehend anhand der Figur 3 näher ausgeführt wird.

Die Figur 3 ist eine schematische Darstellung der Verarbeitungseinrichtung 30, die mehrere Anweisungsebenen 31 bis 33 sowie einen Mikrocontroller 34 umfasst. Der Mikrocontroller 34 ist als Halbleiterbaustein ausgebildet, der nicht näher dargestellte Funktionsbereiche wie ein Rechenwerk und eine Speichereinrichtung umfasst, die mit Hilfe von Befehlen von der ersten Anwendungsebene 31 angesprochen werden können. Die erste Anwendungsebene 31 kann entweder fest auf dem Mikrocontroller 34 vorgegeben sein oder austauschbar gestaltet sein, sie wird auch als Firmware bezeichnet. In einer zweiten Anweisungsebene 32, die auch als Betriebssystem bezeichnet wird, findet eine Verwaltung von Signalen des internen Bussystems und des externen Bussystems statt, die hier entsprechend der vorgesehenen Transportrichtung für die Signale zwischen dem externen Bussystem und dem internen Bussystem oder umgekehrt umgesetzt werden. Ferner ist die zweite Anweisungsebene 32 für eine Weiterleitung von Signalen an die erste Anweisungsebene 31, beispielsweise zur Speicherung von Signalen in der Speichereinrichtung und/oder zum Auslesen von gespeicherten Daten aus der Speichereinrichtung ausgebildet. Darüber hinaus ist die zweite Anweisungsebene 32 auch für einen Datenaustausch mit der dritten Anweisungsebene 33 eingerichtet, die exemplarisch als virtuelle Maschine im Sinne einer Laufzeitumgebung ausgebildet ist. Die dritte Anweisungsebene 33 stellt eine geschützte Umgebung für ein Anweisungsmodul 35 bereit, das über eine nicht näher dargestellte Schnittstelle in die dritte Anweisungsebene 33 geladen werden kann und das für eine Verarbeitung von Signalen, insbesondere von Rohdaten aus der zweiten Anweisungsebene ausgebildet ist. Ein Datenaustausch des Anweisungsmoduls 35 mit der ersten oder zweiten Anweisungsebene 31, 32 ist stets nur durch Vermittlung über die dritte Anweisungsebene möglich, um unerwünschte oder unerlaubte Zugriffe des Anweisungsmoduls 35 - beispielsweise auf den Mikrocontroller 34 - zu vermeiden.

Mit Hilfe des Anweisungsmoduls 35 können beispielsweise v eingehende Signale eines Sensors 16 im Busknoten 11 gezählt werden und bei Erreichen einer vorgebbaren Anzahl von Zählimpulsen kann ein Ausgangssignals über die zweite Anweisungsebene an das externe und/oder das interne _Bussystem ausgegeben werden.

Ergänzend oder alternativ kann das Anweisungsmodul 35 für eine logische Verknüpfung mehrerer Signale, beispielsweise der Signale eines Sensors 16 und eines Aktors 17 vorgesehen sein, um daraus bei Vorliegen eines vorgebbaren Signalmusters ein oder mehrere Ausgangssignale zu erzeugen.

Das oder die Ausgangssignale können vom Busknoten 11 zur weiteren Verarbeitung in der Maschinensteuerung 22 an das externe Bussystem 21 bereitgestellt zu werden. Ergänzend oder alternativ können das oder die Ausgangssignale vom Busknoten 22 über das interne Bussystem an ein Eingangs-/Ausgangsmodul 12 zu Ansteuerung eines an dieses Eingangs-/Ausgangsmodul 12 angeschlossenen Sensors 16, beispielsweise zur Sensorparametrierung, und/oder Aktors 17, beispielsweise zur Aktorsteuerung oder Aktorregelung genutzt werden. Ergänzend oder alternativ können das oder die Ausgangssignale auch an Funktionsmodule 13 weitergeleitet werden, um dort vorgebbare Aktionen auszulösen.

Somit ermöglicht die Verarbeitung der Signale im Busknoten 22 auch eine Überwachung extrem schneller Vorgänge, die sich im Millisekundenbereich abspielen und eine besonders rasche Reaktion auf sich ändernde Signale der Sensoren 16 und/oder Aktoren 17.

## Patentansprüche

1. Signalverarbeitungssystem mit einem Busknoten (10), der für eine für eine Signalwandlung zwischen Signalen eines internen und eines externen Bussystems ausgebildet ist und jeweils wenigstens eine Schnittstelle für eine Kopplung mit dem externen Bussystem und mit dem internen Bussystem umfasst, sowie mit wenigstens einem Signalaufbereitungsmodul (12), das für eine physikalischen Aufbereitung und/oder einer Analog/Digitalwandlung der Signale einer externen Komponente (16, 17) ausgebildet ist und eine Schnittstelle für ein internes Bussystem und wenigstens einen Anschluss für die externe Komponente (16, 17) umfasst und mit dem Busknoten (10) über das interne Bussystem verbunden ist, wobei der Busknoten (10) für eine interne Rohdatenverarbeitung der vom Signalaufbereitungsmodul (12) bereitgestellten Signale sowie für eine Ausgabe wenigstens eines von den verarbeiteten Rohdaten abhängigen Ausgangssignals an das interne und/oder an das externe Bussystem ausgebildet ist, wobei der Busknoten (10) eine zumindest teilweise frei programmierbare und/oder frei belegbare Speichereinrichtung zur Speicherung eines Algorithmus und eine Verarbeitungseinrichtung (34) zur Verarbeitung der vom Signalaufbereitungsmodul (12) bereitgestellten Signale und zur Ausgabe eines Ausgangssignals mittels des gespeicherten Algorithmus umfasst, wobei in der Verarbeitungseinrichtung (34) mehrere Anweisungsebenen (31, 32, 33) zur Verarbeitung unterschiedlicher Anweisungen vorgesehen sind, wobei eine erste Anweisungsebene (31) für eine unmittelbare Kommunikation mit der Verarbeitungseinrichtung (34) und weitere Anweisungsebenen (32, 33) für eine Kommunikation mit jeweils benachbarten Anweisungsebenen (31, 32, 33) eingerichtet sind, wobei die Verarbeitungseinrichtung (34) in einer Anweisungsebene (32, 33), die über der ersten Anweisungsebene (31) angesiedelt ist, für einen, insbesondere gesicherten, Datenaustausch mit wenigstens einem Anweisungsmodul (35) mittels eines standardisierten Anweisungsbefehlssatzes eingerichtet ist und wobei die Verarbeitungseinrichtung (34) in einer Anweisungsebene (32, 33), die über der ersten Anweisungsebene (31) angesiedelt ist, eine virtuelle Maschine, insbesondere eine Laufzeitumgebung, umfasst, die zum Betrieb des Anweisungsmoduls (35) in einer standardisierten, insbesondere gesicherten, Anweisungsmodulumgebung ausgebildet ist.

2. Signalverarbeitungssystem nach Anspruch 1, **dadurch gekennzeichnet, dass** die Verarbeitungseinrichtung (34) in einer Anweisungsebene (32, 33), die über der ersten Anweisungsebene (31) angesiedelt ist, für einen Betrieb eines oder mehrerer, vorzugsweise endnutzerseitig vorgebbarer, Anweisungsmodule (35) eingerichtet ist und dass der zur Verarbeitung der vom Signalaufbereitungsmodul (12) bereitgestellten Signale und zur Ausgabe eines Ausgangssignals vorgesehene Algorithmus als Anweisungsmodul (35) ausgebildet ist.

3. Signalverarbeitungssystem nach Anspruch 1, **dadurch gekennzeichnet, dass** die virtuelle Maschine für eine gleichzeitige Verwaltung mehrerer Anweisungsmodule (35) eingerichtet ist und/oder dass mehrere virtuelle Maschinen zur Verarbeitung unterschiedlicher Anweisungsmodule (35) vorgesehen sind.

4. Signalverarbeitungssystem nach Anspruch 1, **dadurch gekennzeichnet, dass** die Speichereinrichtung für einen Schreibzugriff oder einen Lese- und Schreibzugriff auf das wenigstens eine Anweisungsmodul (35) mittels des externen Bussystems und/oder einer am Busknoten (10) ausgebildeten Eingangsschnittstelle ausgebildet ist, um eine Änderung und/oder eine Parametrierung und/oder einen Austausch des Anweisungsmoduls (35) zu ermöglichen.

5. Signalverarbeitungssystem nach Anspruch 1, **dadurch gekennzeichnet, dass** das Anweisungsmodul (35) für eine Überwachung von Energieströmen und/oder Volumenströmen und/oder Wartungsintervallen und/oder Sicherheitsfunktionen der daran angeschlossenen externen Komponente (16, 17) ausgebildet ist.

6. Signalverarbeitungssystem nach einem der vorhergehenden Ansprüche, **dadurch gekennzeichnet, dass** das Signalaufbereitungsmodul (12) ausschließlich für eine physikalischen Aufbereitung und/oder eine Analog/Digitalwandlung von Signalen einer externen Komponente (16, 17) ausgebildet ist.

7. Signalverarbeitungssystem nach einem der vorhergehenden Ansprüche, **dadurch gekennzeichnet, dass** der Busknoten (10) für die Bereitstellung eines Ausgangssignals ausgebildet ist, das für eine Ansteuerung wenigstens einer mit einem Signalaufbereitungsmodul (12) verbundenen externen Komponente (16, 17) und/oder eines Funktionsmoduls (13), eingerichtet ist.

8. Verfahren zur Verarbeitung von Signalen in einem Signalverarbeitungssystem (10), das für eine Erfassung von Signalen einer externen Komponente (16, 17), eine Weiterleitung der Signale über ein internes Bussystem zu einem Busknoten (10) und eine Verarbeitung der Signale im Busknoten (10) ausgebildet ist, **gekennzeichnet durch** die Schritte: Empfangen von Signalen einer externen Komponente (16, 17), Aufbereiten und/oder Digitalisieren der Signale, Übertragen der Signale über das interne Bussystem an den Busknoten (10), Verarbeiten der als Rohdaten im Busknoten (10) eintreffenden Signale mittels eines im Busknoten (10) hinterlegten Algorithmus, Ausgeben eines **durch** die Verarbeitung erzeugten Ausgangssignals an eine externe Komponente (16, 17) und/oder an ein Funktionsmodul (13), wobei die als Rohdaten im Busknoten (10) eintreffenden Signale in einer vom Busknoten (10) umfassten Verarbeitungseinrichtung (34), in der mehrere Anweisungsebenen (31, 32, 33) zur Verarbeitung unterschiedlicher Anweisungen ausgebildet sind, wobei eine erste Anweisungsebene (31) für eine unmittelbare Kommunikation mit der Verarbeitungseinrichtung (34) und weitere Anweisungsebenen (32, 33) für eine Kommunikation mit jeweils benachbarten Anweisungsebenen (31, 32, 33) eingerichtet sind, in einer über der ersten Anweisungsebene (31) angesiedelten weiteren Anweisungsebene (32, 33) von dem als Anweisungsmodul (35) in einer virtuellen Maschine, insbesondere in einer Laufzeitumgebung, ausgebildeten Algorithmus verarbeitet werden.

9. Verfahren nach Anspruch 8, **dadurch gekennzeichnet, dass** ein Schreibzugriff oder ein Lese- und Schreibzugriff mittels des externen Bussystems und/oder einer am Busknoten ausgebildeten Eingangsschnittstelle auf die Speichereinrichtung vorgenommen wird, um eine Änderung und/oder eine Parametrierung und/oder einen Austausch des Anweisungsmoduls (35) zu bewirken.

10. Verfahren nach einem der Ansprüche 8 oder 9, **dadurch gekennzeichnet, dass** im Signalaufbereitungsmodul (12) ausschließlich eine physikalischen Aufbereitung und/oder eine Analog/Digitalwandlung von Signalen einer externen Komponente (16, 17) vorgenommen wird.

## Claims

1. Signal processing system with a bus node (10), which is designed for signal conversion between signals of an internal and an external bus system, and in each case comprising at least one interface for coupling to the external bus system and the internal bus system, and with at least one signal conditioning module (12) which is designed for physical conditioning and/or analog-to-digital conversion of signals of an external component (16, 17) and has an interface for the internal bus system and at least one connection for the external component (16, 17), and is connected to the bus node (10) via the internal bus system, wherein the bus node (10) is designed for internal raw data processing of signals provided by the signal conditioning module (12), and for output of at least one output signal, dependent on the processed signals, to the internal and/or the external bus system, the bus node (10) includes an at least partly freely programmable and/or freely allocable memory device for the storage of an algorithm, and a processing device (34) for processing the signals provided by the signal conditioning module (12) and for the output of an output signal by means of the stored algorithm, wherein the processing device (34) contains several instruction levels (31, 32, 33) for the processing of different instructions, wherein a first instruction level (31) is set up for direct communication with the processing device (34), and further instruction levels (32, 33) for with in each case adjacent instruction levels (31, 32, 33), wherein the processing device (34) is set up, in an instruction level (32, 33) which is located above the first instruction level (31), for data interchange, in particular secured, with at least one instruction module (35) by means of a standardised instruction command set and wherein the processing device (34) includes in one instruction level (32, 33), which is located above the first instruction level (31), a virtual machine, in particular a runtime environment, which is designed to operate the instruction module (35) in a standardised, in particular secure, instruction module environment.

2. Signal processing system according to claim 1, **characterised in that** the processing device (34) is set up in one instruction level (32, 33), located above the first instruction level (31), for the operation of one more more instruction modules (35), preferably presettable by the end user, and that the algorithm provided for processing the signals supplied from the signal conditioning module (12) and to output an output signal is in the form of an instruction module (35).

3. Signal processing system according to claim 1, **characterised in that** the virtual machine is set up for simultaneous administration of several instruction modules (35) and/or that several virtual machines are provided for the processing of different instruction modules (35).

4. Signal processing system according to claim 1, **characterised in that** the memory device is designed for write access or read-write access on the instruction module or modules (35) by means of the external bus system and/or an input interface formed on the bus node (10), in order to facilitate modification and/or parameter setting and/or replacement of the instruction module (35).

5. Signal processing system according to claim 1, **characterised in that** the instruction module (35) is designed for monitoring energy flows and/or volume flows and/or servicing intervals and/or safety functions of the external components (16, 17) connected thereto.

6. Signal processing system according to any of the preceding claims, **characterised in that** the signal conditioning module (12) is designed exclusively for physical conditioning and/or analog-to-digital conversion of signals of an external component (16, 17).

7. Signal processing system according to any of the preceding claims, **characterised in that** the bus node (10) is designed for the provision of an output signal which is set up for the driving of at least one external component (16, 17) and/or function module (13) connected to a signal conditioning module (12).

8. Method for processing signals in a signal processing system (10) which is designed for detection of signals of an external component (16, 17), passing on of the signals via an internal bus system to a bus node (10), and processing of the signals in the bus node (10), **characterised by** the following steps: receiving of signals from an external component (16, 17), conditioning and or digitalisation of the signals, transmission of the signals via the internal bus system to the bus node (10), processing of the signals arriving as raw data in the bus node (10) by means of an algorithm filed in the bus node (10), output of an output signal generated through the processing to an external component (16, 17) and/or a function module (13), wherein the signals arriving at the bus node (10) as raw data are processed in a processing device (34) included in the bus node (10) and in which several instruction levels (31, 32, 33) are designed for the processing of different instructions, wherein a first instruction level (31) is set up for direct communication with the processing device (34) and further instruction levels (32, 33) for communication with respectively adjacent instruction levels (31, 32, 33), in a further instruction level (32, 33) located above the first instruction level (31) by the algorithm in the form of an instruction module (35), in a virtual machine, in particular in a runtime environment.

9. Method according to claim 8, **characterised in that** write access or read-write access to the memory device is made by means of the external bus system and/or an input interface formed at the bus node, in order to accomplish a change and/or parameter setting and/or replacement of the instruction module (35).

10. Method according to any of claims 8 or 9, **characterised in that** the signal conditioning module (12) carries out exclusively physical conditioning and/or analog-to-digital conversion of signals of an external component (16, 17).

## Revendications

1. Système de traitement de signal comprenant un noeud de bus (10), qui est réalisé pour effectuer une conversion de signal entre des signaux d'un système de bus interne et d'un système de bus externe et qui comprend au moins une interface pour un couplage au système de bus externe et au système de bus interne, et comprenant également au moins un module de préparation de signal (12), qui est réalisé pour une préparation physique et/ou d'une conversion analogique/numérique des signaux d'un composant externe (16, 17) et qui comprend une interface pour un système de bus interne et à au moins une borne destinée au composant externe (16, 17) et qui est relié au noeud de bus (10) par l'intermédiaire du système de bus interne, sachant que le noeud de bus (10) est réalisé pour un traitement de données brutes interne des signaux délivrés par le module de préparation de signal (12) ainsi qu'en vue d'une émission d'au moins un signal de sortie dépendant des données brutes traitées pour système de bus interne et/ou du système de bus externe, sachant que le noeud de bus (10) comprend un dispositif de stockage, au moins en partie librement programmable et/ou pouvant être équipé librement, pour stocker un algorithme et un dispositif de traitement (34) pour traiter des signaux délivrés par le module de préparation de signal (12) et pour émettre un signal de sortie au moyen de l'algorithme stocké, sachant que dans le dispositif de traitement (34) sont prévus plusieurs niveaux d'instruction (31, 32, 33) servant à traiter diverses instructions, sachant qu'un premier niveau d'instruction (31) est mis au point pour une communication directe avec le dispositif de traitement (34) et que d'autres niveaux d'instruction (32, 33) sont mis au point pour une communication avec respectivement des niveaux d'instructions (31, 32, 33) adjacents, sachant que le dispositif de traitement (34) est mis au point pour un échange de données, en particulier sécurisé, avec au moins un module d'instruction (35), au moyen d'un jeu de commandes d'instruction standardisé, dans un niveau d'instruction (32, 33) hiérarchiquement supérieur au premier niveau d'instruction (31), et sachant que le dispositif de traitement (34) comprend dans un niveau d'instruction (32, 33), qui est hiérarchiquement supérieur au premier niveau d'instruction (31), une machine virtuelle, en particulier un environnement d'exécution, qui est réalisée pour faire fonctionner le module d'instruction (35) dans un environnement de module d'instruction standardisé, en particulier sécurisé.

2. Système de traitement de signal selon la revendication 1, **caractérisé en ce que** le dispositif de traitement (34) est configuré pour un fonctionnement d'un ou de plusieurs modules d'instruction (35), de préférence pouvant être spécifiés côté utilisateur final, dans un niveau d'instruction (32, 33), qui est hiérarchiquement supérieur au premier niveau d'instruction (31), et **en ce que** l'algorithme prévu aux fins du traitement des signaux délivrés par le module de préparation de signal (12) et aux fins de l'émission d'un signal de sortie est réalisé sous la forme d'un module d'instruction (35).

3. Système de traitement de signal selon la revendication 1, **caractérisé en ce que** la machine virtuelle est agencée pour une gestion simultanée de plusieurs modules d'instruction (35), et/ou **en ce que** plusieurs machines virtuelles sont prévues pour le traitement de divers modules d'instruction (35).

4. Système de traitement de signal selon la revendication 1, **caractérisé en ce que** le dispositif de stockage est réalisé un accès en écriture ou d'un accès en lecture et en écriture de l'au moins module d'instruction (35) au moyen du système de bus externe et/ou d'une interface d'entrée réalisée au niveau du noeud de bus (10) pour permettre une modification et/ou une configuration et/ou un remplacement du module d'instruction (35).

5. Système de traitement de signal selon la revendication 1, **caractérisé en ce que** le module d'instruction (35) est réalisé pour une surveillance des flux d'énergie et/ou des flux volumiques et/ou des intervalles de maintenance et/ou des fonction de sécurité du composant (16, 17) externe raccordé au module d'instruction.

6. Système de traitement de signal selon l'une quelconque des revendications précédentes, **caractérisé en ce que** le module de préparation de signal (12) est réalisé seulement pour une préparation physique et/ou d'une conversion analogique/numérique de signaux d'un composant (16, 17) externe.

7. Système de traitement de signal selon l'une quelconque des revendications précédentes, **caractérisé en ce que** le noeud de bus (10) est réalisé pour la délivrance d'un signal de sortie, qui est mis au point pour une commande d'au moins un composant (16, 17) externe raccordé à un module de préparation de signal (12) et/ou d'un module fonctionnel (13).

8. Procédé servant à traiter des signaux dans un système de traitement de signal (10), qui est réalisé dans le noeud de bus (10) pour la détection de signaux d'un composant (16, 17) externe, pour un transfert des signaux par l'intermédiaire d'un système de bus interne en direction d'un noeud de bus (10) et pour un traitement des signaux, **caractérisé par** les étapes qui suivent consistant à : recevoir des signaux d'un composant (16, 17) externe ; préparer et/ou numériser des signaux ; transmettre les signaux, par l'intermédiaire du système de bus interne, au noeud de bus (10) ; traiter les signaux arrivant sous la forme de données brutes dans le noeud de bus (10) au moyen d'un algorithme stocké dans le noeud de bus (10) ; délivrer un signal de sortie, produit par le traitement, à un composant (16, 17) externe et/ou à un module fonctionnel (13), sachant que les signaux arrivant sous la forme de données brutes dans le noeud de bus (10) sont traités dans un dispositif de traitement (34), compris par le noeud de bus (10), dans lequel plusieurs niveaux d'instruction (31, 32, 33) sont réalisés dans ledit dispositif de traitement aux fins du traitement des diverses instructions, sachant qu'un premier niveau d'instruction (31) est mis au point pour une communication directe avec le dispositif de traitement (34) et que d'autres niveaux d'instruction (32, 33) sont agencées pour une communication avec respectivement des niveaux d'instruction (31, 32, 33) adjacents, dans un autre plan d'instruction (32, 33) hiérarchiquement supérieur au premier niveau d'instruction (31), par l'algorithme réalisé sous la forme d'un module d'instruction (35) dans une machine virtuelle, en particulier dans un environnement d'exécution.

9. Procédé selon la revendication 8, **caractérisé en ce qu'**un accès en écriture ou un accès en lecture et en écriture est effectué au moyen du système de bus externe et/ou d'une interface d'entrée réalisée au niveau du noeud de bus sur le dispositif de stockage pour entraîner une modification et/ou une configuration et/ou un remplacement du module d'instruction (35).

10. Procédé selon l'une quelconque des revendications 8 ou 9, **caractérisé en ce qu'**on effectue dans le module de préparation de signal (12) seulement une préparation physique et/ou une conversion analogique/numérique de signaux d'un composant (16, 17) externe.
